# EUROPÄISCHE PATENTSCHRIFT

(11) **EP 3 363 842 B1**
(45) Veröffentlichungstag und Bekanntmachung des Hinweises auf die Patenterteilung: **02.10.2019**
(21) Anmeldenummer: 18156956.7
(22) Anmeldetag: 15.02.2018
(51) Int. Cl.: C08G 63/91

(54) **METHODE ZUR ERZEUGUNG VON HOCHMODULIGEN UND HOCHFESTEN POLYESTERN**
METHOD FOR GENERATING HIGH MODULUS AND HIGH-STRENGTH POLYESTERS
PROCÉDÉ DE PRODUCTION DE POLYESTERS À HAUT MODULE ET À HAUTE RÉSISTANCE

(30) Priorität: 15.02.2017 DE 102017103060
(43) Veröffentlichungstag der Anmeldung: 22.08.2018
(73) Patentinhaber: Technische Universität Dortmund, 44227 Dortmund (DE)
(72) Erfinder: Tiller, Jörg Christian, 58313 Herdecke (DE); Katzenberg, Frank, 59425 Unna (DE); Raidt, Thomas, 44149 Dortmund (DE)
(74) Vertreter: Michalski Hüttermann & Partner Patentanwälte mbB

(56) Entgegenhaltungen:
- JP-A- 2007 076 313
- JP-A- 2011 104 969
- US-B1- 6 376 624

## Beschreibung

Die vorliegende Erfindung bezieht sich auf das Gebiet der Polyester, insbesondere aromatischer Polyester, die aus Reaktion von aromatischen Dicarbonsäuren mit Diolen herstellbar sind.

Leichtbauwerkstoffe, wie beispielsweise Profile oder Platten, werden anhand ihrer gewichtsspezifischen Steifigkeit und Festigkeit gemessen. Holzwerkstoffe sind aufgrund ihrer geringen Dichte daher bis heute immer noch mit allen anderen Leichtbauwerkstoffen, z.B. Kohlefaserverbunde, konkurrenzfähig. Obwohl Polymere über eine geringe Dichte verfügen und prinzipiell durch Orientierung der Makromoleküle extreme Steifigkeits- und Festigkeitserhöhungen erfahren, spielen diese in Form von Profilen oder Platten im Leichtbau bislang keine Rolle. Grund dafür ist, dass verfestigend und versteifend wirkende Orientierungen bislang auf Polymere in Form von "dünnen" Fasern oder Folien mit großem Oberflächen zu Volumen Verhältnis (O/V) begrenzt sind. Die Realisierung von hochfesten und hochsteifen dicken, bzw. volumigen Platten oder Profilen (z.B. L-, T-,U-Profil) mit geringem O/V ist aufgrund entropiebedingter Relaxationsvorgänge, die in unvernetzten Polymerschmelzen immer dann den Orientierungsgrad negativ beeinflussen, wenn die Kristallisation nicht schnell genug abläuft, beispielsweise durch zu langsame Abfuhr von Wärme oder Lösungsmittel, nicht möglich.

Polyester sind unter Anderem aus der US 6,376,624 B1, der JP 2011/104969 A und der JP 2007/076313 A bekannt.

Polyester werden aufgrund zahlreicher vorteilhafter Eigenschaften weitgefächert eingesetzt. Derart hohe Steifigkeiten und Festigkeiten, so dass Polyester mit klassischen Leichtbaumaterialien (CFK, GFK, Magnesium, Aluminium, etc.) konkurrieren oder diese sogar übertreffen können, sind nur durch ein hochorientiertes Gefüge erzielbar, welches aber gemäß dem Stand der Technik auf Polyester in Form von dünnen Fasern und Folien limitiert ist.

Es stellt sich somit die Aufgabe, Polyester zu schaffen, die insbesondere in volumiger Probengeometrie, beispielsweise in Form von dicken Platten oder Profilen, hochmodulig und/oder hochfest sind.

Diese Aufgabe wird durch einen Polyester nach Anspruch 1 gelöst. Demgemäß wird ein vernetzter Polyester vorgeschlagen, wobei der Quervernetzungsgrad ≥ 0,0001% bis ≤ 25% beträgt und einem Orientierungsgrad von ≥ 50%.

Der Quervernetzungsgrad kann dabei mittels Spannungs-Dehnungs-Verlauf und der Mooney-Rivlin-Theorie ermittelt werden.

Der Orientierungsgrad kann insbesondere mittels Weitwinkel-Röntgendiffraktometrie (WAXS) und der Auswertung der Aussichelung der Beugungsreflexe entlang des Azimuthalwinkels bestimmt werden.

Überraschenderweise hat sich herausgestellt, dass so bei vielen Anwendungen die Eigenschaften des Polyesters stark verbessert werden können.

Insbesondere kann bei den meisten Anwendungen einer oder mehrere der folgenden Vorteile erreicht werden
- Der erfindungsgemäße Polyester ist auf einfache Weise aus kommerziellen Polyestern herstellbar. Die weiteren Eigenschaften des Polyesters, insbesondere Schmelztemperatur Tₘ, Glasübergangstemperatur T_{g}" Kristallinitätsgrad K, Ausgangs-E-Modul und Ausgangszugfestigkeit bleiben obendrein dabei nahezu unverändert erhalten.
- Der erfindungsgemäße Polyester ist in vielen Anwendungen einsetzbar, bei denen bisherige Polyester nicht verwendet werden können.

Gemäß einer bevorzugten Ausführungsform beträgt der Quervernetzungsgrad des Polyesters ≥ 0,01% bis ≤ 20%, noch bevorzugt ≥ 0,1% bis ≤ 10%. Dies hat sich bei vielen Anwendungen bewährt.

Gemäß einer bevorzugten Ausführungsform beträgt der Orientierungsgrad des Polyesters ≥ 60%, noch bevorzugt ≥ 70%. Dies hat sich bei vielen Anwendungen bewährt.

Gemäß einer bevorzugten Ausführungsform ist der Polyester im wesentlichen endgruppenvernetzt. Unter dem Term "endgruppenvernetzt" wird insbesondere verstanden, dass die Vernetzung mittels eines multifunktionalen Vernetzers erfolgt, der mehrere Kettenenden miteinander vernetzt.

Gemäß einer bevorzugten Ausführungsform umfasst der Polyester mindestens eine aromatische Carbonsäure, bevorzugt sind im wesentlichen alle Carbonsäureeinheiten des Polyesters von aromatischen Carbonsäuren abgeleitet.

Im Sinne der vorliegenden Erfindung bedeutet dabei "im wesentlichen" ≥ 95 Gew-%, noch bevorzugt ≥ 97 Gew-% sowie am meisten bevorzugt ≥ 99 Gew-%.

Gemäß einer bevorzugten Ausführungsform umfasst der Polyester mindestens einen Polyester, abgeleitet aus einer Dicarbonsäure und einem Diol. Bevorzugt bestehen seine linearen Ketten im wesentlichen daraus.

Gemäß einer bevorzugten Ausführungsform umfasst dabei die Dicarbonsäuren eine aromatische Dicarbonsäure, bevorzugt bestehen sie im wesentlichen daraus. Besonders bevorzugt ist dabei Terephthalsäure.

Gemäß einer bevorzugten Ausführungsform umfasst der Polyester PET und/oder PBT, bevorzugt besteht er im wesentlichen daraus.

Gemäß einer bevorzugten Ausführungsform umfasst das Diol ein aliphatisches α,ω-Diol, bevorzugt mit zwei bis vier Kohlenstoffatomen, besonders bevorzugt besteht es im Wesentlichen daraus. Besonders bevorzugt ist Ethylenglykol und 1,4 -Butandiol.

Gemäß einer bevorzugten Ausführungsform beträgt die durchschnittliche Molmasse des Polyesters ≥ 2.000 g/mol bis ≤ 250.000 g/mol, besonders bevorzugt ≥ 2.100 g/mol bis ≤ 50.000 g/mol.

Die vorliegende Erfindung bezieht sich außerdem auf die Herstellung eines erfindungsgemäßen Polymers, umfassend die Schritte:
a) Vorlegen eines linearen Basispolyesters
b) Endgruppenvernetzen des Basispolyesters, bis ein Quervernetzungsgrad von ≥ 0,0001% bis ≤25% erzielt ist.
c) Uniaxiales Dehnen des Polymers auf bevorzugt ≥ 50%, besonders bevorzugt ≥ 100%, ganz besonders bevorzugt auf ≥300%.

Es hat sich herausgestellt, dass auf diese Weise einfach erfindungsgemäße Polymere hergestellt werden können. Insbesondere kann bei den meisten Anwendungen einer oder mehrere der folgenden Vorteile erreicht werden
- Der erfindungsgemäße Polyester ist auf einfache Weise aus kommerziellen Polyestern herstellbar. Die weiteren Eigenschaften des Polyesters, insbesondere Schmelztemperatur Tₘ, Glasübergangstemperatur T_{g},, Kristallinitätsgrad K bleiben obendrein dabei nahezu erhalten.
- Der erfindungsgemäße Polyester ist in vielen Anwendungen einsetzbar, bei denen bisherige Polyester nicht verwendet werden können.

Die einzelnen Schritte des erfindungsgemäßen Verfahrens werden im Folgenden näher erläutert, wobei einzelne Merkmale beliebig miteinander kombinierbar sind:

### Schritt a) Vorlegen eines linearen Basispolyesters.

Bevorzugte Basispolyester sind hier insbesondere PET und PBT.

Gemäß einer bevorzugten Ausführungsform beträgt die durchschnittliche Molmasse des Basispolyesters ≥ 2.000 g/mol bis ≤ 250.000 g/mol, besonders bevorzugt ≥ 2.500 g/mol bis ≤ 40.000 g/mol.

Der Basispolyester selbst kann nach allen bekannten Methoden aus dem Stand der Technik hergestellt werden.

### Schritt b) Endgruppenvernetzung

Schritt b) wird bevorzugt bis zu einem Quervernetzungsgrad von ≥ 0,01% bis ≤20%, noch bevorzugt ≥ 0,1% bis ≤ 10% durchgeführt. Der Quervernetzungsgrad kann dabei z.B. durch das Verhältnis von Basispolyester zu Quervernetzungsreagens (s. im Folgenden) eingestellt werden.

Schritt b) wird bevorzugt bei erhöhten Temperaturen durchgeführt, besonders bevorzugt sind hierbei Temperaturen von ≥ T_{g} +10 °C bis ≤ Tₘ +70 °C, wobei T_{g} die Glasübergangstemperatur und Tₘ die Schmelztemperatur des Basispolyesters beträgt.

Schritt b) kann unter Zuhilfenahme eines Lösemittels oder auch lösemittelfrei erfolgen.

Schritt b) wird bevorzugt durch Zugabe eines Quervernetzungsreagens durchgeführt. Darunter wird ein höherfunktionales Reagens verstanden, welches in der Lage ist, mit den Endgruppen der linearen Polyesterstränge des Basispolyesters zu reagieren und diese so querzuvernetzen.

Bevorzugte Quervernetzungsreagentien sind dabei ausgewählt aus der Gruppe enthaltend Epoxide, bevorzugt Di-, Tri- oder höhere Epoxide, besonders dabei 4,4'-methylenebis(N,N-diglycidylaniline) (TGDDM), multifunktionale Säureanhydride, z.B. Mellitsäureanhydrid, Isocyanate, z.B. Triphenylmethantriisocyanate, Silikate wie z.B. Tetraethylorthosilikat oder Mischungen daraus.

Gemäß einer bevorzugten Ausführungsform der Erfindung wird bei Schritt b) noch ein Konversionsreagenz zugesetzt. Darunter wird ein Reagens verstanden welches mit der Gruppe (Alkohol oder Carbonsäure) des Polyesters, welche ansonsten nicht oder weniger schnell mit dem Quervernetzungsreagens reagiert, seinerseits unter Freisetzung der reaktiven Gruppe reagiert.

Für den Fall, dass das Quervernetzungsreagens eine Epoxidgruppe enthält, ist es bevorzugt, dass das Konversionsreagens eine Anhydridgruppe enthält. Bevorzugt umfasst das Konversionsreagenz ein Molekül ausgewählt aus der Gruppe der Säureanhydride, Epoxide, Isocyanate, Silane oder Mischungen daraus, besonders bevorzugt besteht es im Wesentlichen daraus.

Für den Fall, dass ein Konversionsreagenz vorhanden ist, beträgt das Verhältnis von eingesetztem Quervernetzungsreagens zu eingesetztem Konversionsreagenz (in Gew/Gew) ≥ 0,3:1 bis ≤ 3:1. Dies hat sich in der Praxis bewährt.

### Schritt c) Uniaxiales Dehnen

In Schritt c) wird das in Schritt b) erhaltene Polymer um mindestens 50% oder mehr, bevorzugt ≥ 200%, noch bevorzugt ≥ 300%, ferner bevorzugt ≥ 400% sowie am meisten bevorzugt um ≥500% uniaxial gedehnt.

Der Term "uniaxial" bedeutet und/oder umfasst dabei insbesondere entlang einer Vorzugsrichtung verstreckt.

Schritt c) erfolgt dabei bevorzugt bei einer Ziehrate von ≥0,1 %/min bis ≤ 1000 %/min, bevorzugt von ≥1 %/min bis ≤ 100 %/min. Dies hat sich bei vielen Anwendungen besonders bewährt.

Schritt c) erfolgt weiterhin bevorzugt bei einer Kraft, bezogen auf den Probenquerschnitt von ≥0,001 MPa bis ≤ 50 MPa, besonders bevorzugt ≥0,1 MPa bis ≤ 10 MPa. Dies hat sich bei vielen Anwendungen besonders bewährt.

Bevorzugt erfolgt Schritt c) nach einer der beiden folgenden Methoden:
- Abschrecken und Erwärmen

Gemäß einer bevorzugten Ausführungsform der Erfindung wird das in Schritt b) erhaltene Polymer abgeschreckt und auf eine Temperatur von ≤50 °C gebracht, besonders bevorzugt ≤ 30 °C. Anschließend wird auf eine erhöhte Temperatur, bevorzugt ≥ T_{g} + 30°C bis ≤ T_{g} + 150 °C, wobei T_{g} die Glasübergangstemperatur des Basispolyesters in Schritt a) beträgt, gebracht. Anschließend wird gedehnt.
- Abkühlen

Alternativ kann, ausgehend von der Temperatur in Schritt b) auch auf eine Temperatur von der Glasübergangstemperatur ≥ T_{g} + 10°C bis zu der Schmelztemperatur ≤ Tₘ - 1°C des Polyesters abgekühlt werden, worauf das Dehnen erfolgt.

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können.

Weitere Einzelheiten, Merkmale und Vorteile des Gegenstandes der Erfindung ergeben sich aus den Unteransprüchen sowie aus der nachfolgenden Beschreibung der zugehörigen Zeichnungen, in denen - beispielhaft - mehrere Ausführungsbeispiele des erfindungsgemäßen Polymers und des erfindungsgemäßen Verfahrens dargestellt sind. In den Zeichnungen zeigt:
Fig. 1 ein Diagramm, welches die maximale Zugspannung gegen die Dehnung für mehrere Polymere gemäß Beispiel 1 zeigt,
Fig. 2 ein Diagramm, welches das Elastizitätsmodul gegen die Dehnung für mehrere Polymere gemäß Beispiel 1 zeigt.
Fig. 3 ein Weitwinkel-Röntgen-Beugungsbild eines erfindungsgemäßen Polymers
Fig. 4 ein Diagramm, welches die maximale Zugspannung gegen die Dehnung für mehrere Polymere gemäß Beispiel 2 zeigt; sowie
Fig. 5 ein Diagramm, welches das Elastizitätsmodul gegen die Dehnung für mehrere Polymere gemäß Beispiel 2 zeigt.

Die Erfindung wird anhand des folgenden Beispiels näher erläutert, welches rein illustrativ und nicht als limitierend anzusehen ist:

### Herstellung eines quervernetzten Polyethylenterephthalats (xPET):

Es wurde im Folgenden ein unter dem Namen "Arnite" kommerziell erhältliches Polyethylenterephthalat mit *M*ₙ = 23.500 g mol⁻¹, PDI = 2,2 verwendet. Dieses wurde zunächst in einem Vakuumofen 10h bei 150°C getrocknet. Anschließend wurden das PET, 3 Gew-% TGDDM sowie 3 Gew-% Phthtalsäureanhydrid (beidesmal bezogen auf das Polyethylenterephthalat) in einen Schraubenextruder gegeben, welcher bei einer Umdrehungsgeschwindigkeit von 120 U/min betrieben wurde, und bei einer Temperatur von 270 °C für 30 Sekunden quervernetzt. Das erhaltene Produkt wurde anschließend in einer Heizpresse bei ebenfalls 270 °C thermisch für 10 Minuten unter Ausschluss von Luft nachbehandelt.

### Für dieses Produkt wurde der Quervernetzungsgrad auf die folgende Weise bestimmt:

Der Quervernetzungsgrad wird aus dem Verhältnis von Molekulargewicht des Monomers und dem Netzkettenmolekulargewicht gebildet und beträgt in diesem Fall 1,6%. Das Netzkettenmolekulargewicht wird nach der Mooney-Rivlin-Methode mit Loose-Ends-Korrektur anhand einer Spannungs-Dehnungskurve in der Schmelze bestimmt.

### Beispiel 1:

In den Polymeren lt. Beispiel 1 wurde jeweils auf die angegebene Temperatur abgekühlt und bei dieser um den angegebenen Betrag gedehnt.

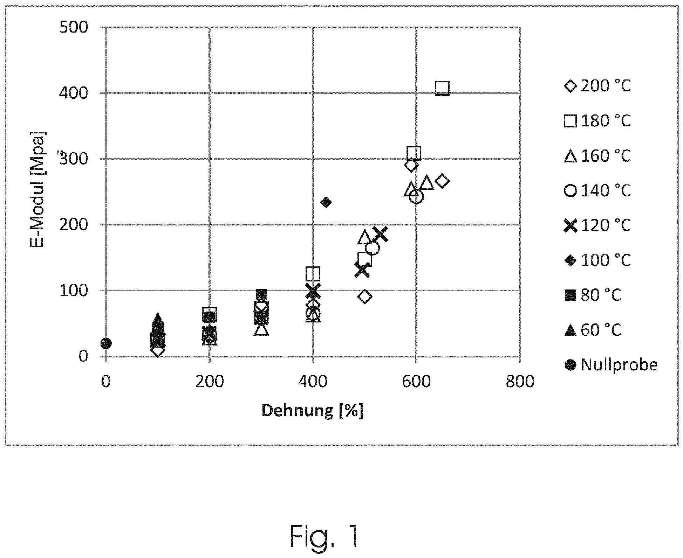

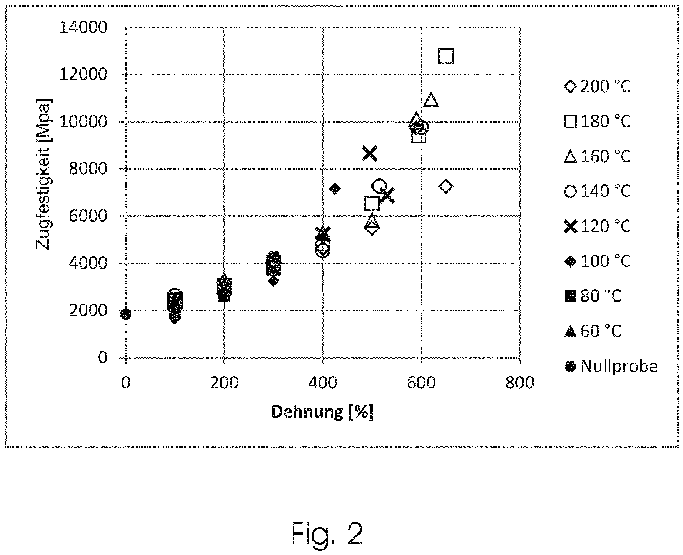

Anschließend wurden das Elastizitätsmodul mittels Dynamisch Mechanischer Analyse (DMA) sowie die maximale Zugspannung mittels Zugprüfung gemessen. Die Resultate sind in den Figuren 1 und 2 aufgeführt, zusammen mit dem nicht quervernetzten PET ("Nullprobe"), sowie in der folgenden Tabelle 1:

**Tabelle 1**

| Probentyp | Temperatur [°C] | Dehnung [%] | E-Modul [Mpa] | Zugfestigkeit [MPa] |
|---|---|---|---|---|
| Erfindungsgemäß | 60 | 100 | 2064 | 57 |
| | 80 | 100 | 1882 | 43 |
| | | 200 | 2608 | 60 |
| | | 300 | 4289 | 94 |
| | 100 | 100 | 1645 | 35 |
| | | 200 | 2765 | 39 |
| | | 300 | 3255 | 60 |
| | | 400 | 5090 | 94 |
| | | 425 | 7154 | 234 |
| | 120 | 100 | 2340 | 25 |
| | | 200 | 2953 | 34 |
| | | 300 | 3785 | 59 |
| | | 400 | 5225 | 100 |
| | | 495 | 8661 | 131 |
| | | 530 | 6873 | 186 |
| | 140 | 100 | 2632 | 28 |
| | | 200 | 2907 | 35 |
| | | 300 | 3760 | 58 |
| | | 400 | 4534 | 65 |
| | | 515 | 7265 | 164 |
| | | 600 | 9760 | 243 |
| | 160 | 100 | 2330 | 28 |
| | | 200 | 3291 | 28 |
| | | 300 | 3892 | 43 |
| | | 400 | 5266 | 63 |
| | | 500 | 5824 | 181 |
| | | 590 | 10127 | 255 |
| | | 620 | 10950 | 264 |
| | 180 | 100 | 2433 | 25 |
| | | 200 | 3048 | 63 |
| | | 300 | 4023 | 73 |
| | | 400 | 4829 | 125 |
| | | 500 | 6535 | 148 |
| | | 595 | 9406 | 308 |
| | | 650 | 12787 | 407 |
| | 200 | 100 | 2367 | 10 |
| | | 200 | 2983 | 29 |
| | | 300 | 3855 | 78 |
| | | 400 | 4625 | 78 |
| | | 500 | 5491 | 91 |
| | | 590 | 9746 | 291 |
| | | 650 | 7253 | 266 |
| Nullprobe/Vergleichsbeispiel | 180 | 0 | 1833 | 20 |

Für die Probe, die bei 120°C um 300% gedehnt wurde, wurde exemplarisch der Orientierungsgrad gemessen.

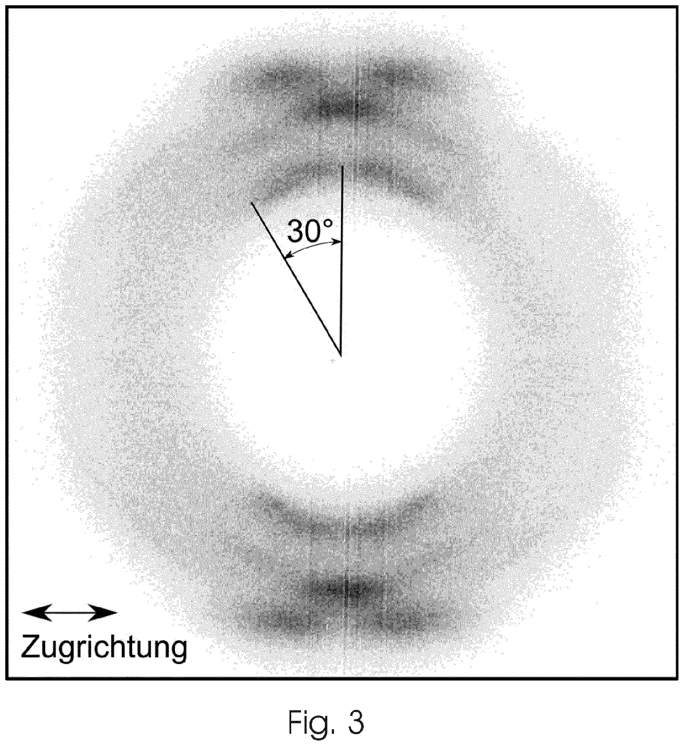

Dieser wird anhand der azimutalen Aussichelung ΔΦ eines Äquatorreflexes im Beugungsbild bestimmt und berechnet sich nach der Formel: (180°-ΔΦ)/180°×100%. In Figur 3 ist das entsprechende Beugungsbild gezeigt. Der Winkel der Aussichelung beträgt hier 30°, woraus sich ein Orientierungsgrad von 83% ergibt.

Beispiel 2: In den Polymeren lt. Beispiel 2 wurde zunächst mit Wasser auf Raumtemperatur abgeschreckt und anschließend auf die angegebene Temperatur erwärmt und bei dieser um den angegebenen Betrag gedehnt.

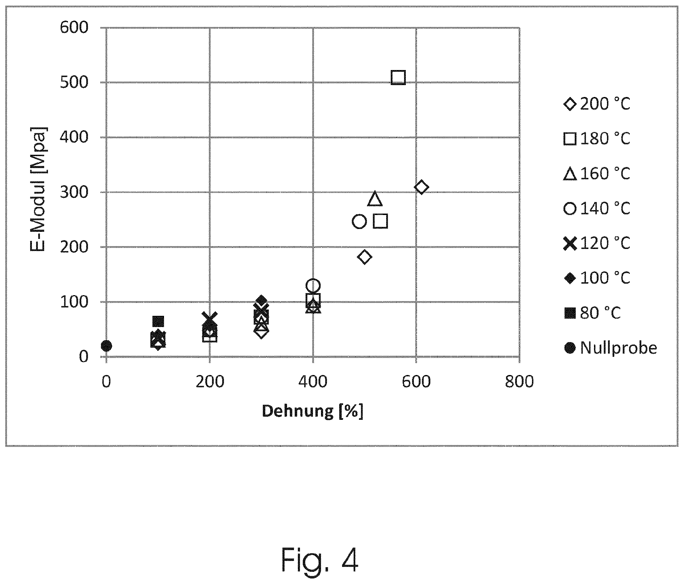

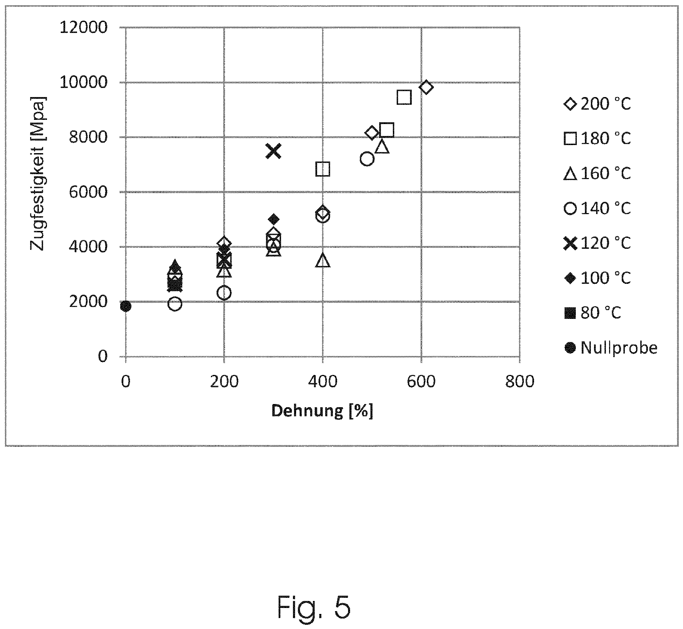

Anschließend wurden das Elastizitätsmodul sowie die maximale Zugspannung wie oben angegeben gemessen. Die Resultate sind in den Figuren 4 und 5 aufgeführt, zusammen mit dem nicht quervernetzten PET ("Nullprobe"), sowie in der folgenden Tabelle 2:

**Tabelle 2**

| Probentyp | Temperatur [°C] | Dehnung [%] | E-Modul [Mpa] | Zugfestigkeit [MPa] |
|---|---|---|---|---|
| Erfindungsgemäß | 80 | 100 | 2601 | 64 |
| | 100 | 100 | 3241 | 41 |
| | | 200 | 3922 | 56 |
| | | 300 | 5010 | 103 |
| | 120 | 100 | 2630 | 33 |
| | | 200 | 3540 | 68 |
| | | 300 | 7500 | 83 |
| | 140 | 100 | 1921 | 29 |
| | | 200 | 2325 | 50 |
| | | 300 | 4050 | 74 |
| | | 400 | 5131 | 129 |
| | | 490 | 7208 | 246 |
| | 160 | 100 | 3267 | 30 |
| | | 200 | 3160 | 49 |
| | | 300 | 3926 | 61 |
| | | 400 | 3525 | 93 |
| | | 520 | 7671 | 289 |
| | 180 | 100 | 2790 | 31 |
| | | 200 | 3480 | 40 |
| | | 300 | 4215 | 73 |
| | | 400 | 6832 | 102 |
| | | 530 | 8263 | 248 |
| | | 565 | 9461 | 509 |
| | 200 | 100 | 2684 | 25 |
| | | 200 | 4130 | 48 |
| | | 300 | 4470 | 46 |
| | | 400 | 5271 | 92 |
| | | 500 | 8158 | 182 |
| | | 610 | 9821 | 309 |
| Nullprobe/Vergleichsbeispiel | 180 | 0 | 1833 | 20 |

Man sieht in allen verwendeten erfindungsgemäßen Polymeren die deutliche Erhöhung, sowohl bei Elastizitätsmodul wie bei der Zugspannung.

## Patentansprüche

1. Endgruppenvernetzter Polyester, wobei der Quervernetzungsgrad ≥0,0001% bis ≤25% beträgt und einem Orientierungsgrad von mindestens ≥ 50%, wobei der Quervernetzungs- und der Orientierungsgrad wie in der Beschreibung angegeben, bestimmt wird.

2. Polyester nach Anspruch 1, wobei der Polyester mindestens eine aromatische Carbonsäure umfasst

3. Polyester nach Anspruch 1 oder 2, wobei der Polyester mindestens einen Polyester, abgeleitet aus einer Dicarbonsäure und einem Diol, umfasst.

4. Verfahren zur Herstellung eines Polyesters nach einem der Ansprüche 1 bis 3.
a) Vorlegen eines linearen Basispolyesters
b) Endgruppenvernetzen des Basispolyesters, bis ein Quervernetzungsgrad von ≥0,0001% bis ≤25% erzielt ist
c) Uniaxiales Dehnen des Polymers auf ≥ 50%.

5. Verfahren nach Anspruch 4, wobei Schritt b) wird durch Zugabe eines Quervernetzungsreagens durchgeführt wird, ausgewählt aus der Gruppe enthaltend multifunktionale Epoxide, Säureanhydride, Isocyanate, Silikate oder Mischungen daraus.

6. Verfahren nach einem der Ansprüche 4 oder 5, wobei bei Schritt b) noch ein Konversionsreagenz zugesetzt wird.

7. Verfahren nach einem der Ansprüche 4 bis 6, wobei in Schritt c) wird das in Schritt b) erhaltene Polymer um ≥ 200 % uniaxial gedehnt.

## Claims

1. End group crosslinked polyester, wherein the degree of crosslinking is ≥ 0,0001% to ≤ 25% and the degree of orientation is at least ≥ 50%, wherein the degree of crosslinking and the degree of orientation are determined as specified in the description.

2. Polyester according to claim 1, wherein the polyester comprises at least one aromatic carboxylic acid.

3. Polyester according to claim 1 or 2, wherein the polyester comprises at least one polyester derived from a dicarboxylic acid and a diol.

4. Method for producing a polyester according to any one of claims 1 to 3, comprising the steps of:
a) providing a linear base polyester;
b) end group crosslinking of the base polyester until a degree of crosslinking of ≥ 0,0001% to ≤ 25% is achieved; and
c) uniaxial stretching the polymer to ≥ 50%.

5. Method according to claim 4, wherein step b) is carried out under addition of a crosslinking reagent selected from the group comprising multifunctional epoxides, acid anhydrides, isocyanates, silicates or mixtures thereof.

6. Method according to claim 4 or 5, wherein in step b) moreover a conversion reagent is added.

7. Method according to any one of claims 4 to 6, wherein in step c) the polymer obtained in step b) is uniaxially stretched by ≥ 200%.

## Revendications

1. Polyester réticulé par les groupements terminaux, dans lequel le degré de réticulation est ≥ 0,0001 % et ≤ 25 % et un degré d'orientation est au moins ≥ 50 %, où le degré de réticulation et le degré d'orientation sont déterminés comme indiqué dans la description.

2. Polyester selon la revendication 1, dans lequel le polyester comprend au moins un acide carboxylique aromatique.

3. Polyester selon la revendication 1 ou la revendication 2, dans lequel le polyester comprend au moins un polyester dérivé d'un acide dicarboxylique et d'un diol.

4. Procédé de préparation du polyester selon l'une quelconque des revendications 1 à 3, comprenant :
a) la production d'un polyester de base linéaire,
b) la réticulation des groupements terminaux du polyester de base jusqu'à un degré de réticulation ≥ 0,0001 % et ≤ 25 %,
c) l'étirement uniaxial du polymère de ≥ 50 %.

5. Procédé selon la revendication 4, dans lequel l'étape b) est effectuée par addition d'un agent de réticulation sélectionné dans le groupe comprenant des époxydes multifonctionnels, des acides anhydriques multifonctionnels, des isocyanates multifonctionnels, des silicates multifonctionnels ou mélanges de ceux-ci.

6. Procédé selon la revendication 4 ou la revendication 5, dans lequel un agent de conversion est ajouté dans l'étape b).

7. Procédé selon l'une quelconque des revendications 4 à 6, dans lequel dans l'étape c), le polymère obtenu dans l'étape b) est étiré uniaxiallement de ≥ 200 %.
